# EUROPEAN PATENT APPLICATION

(11) **EP 2 060 310 A1**
(43) Date of publication of application: **20.05.2009**
(21) Application number: 07301548.9
(22) Date of filing: 14.11.2007
(51) Int. Cl.: B01D 35/143, B01D 29/60

(54) **Filter for fluid**

(71) Applicant: Delphi Technologies, Inc., Troy, MI 48007 (US)
(72) Inventor: Monnier, Franck, 27930, GUICHAINVILLE (FR)
(74) Representative: Laget, Jean-Loup

(57) **Abstract**

A filter for fluid comprising a filter housing defining a filter cavity within which a filter element is received so as to define an inlet-side chamber and an outlet-side chamber an inlet to permit a first fluid to flow into the inlet side chamber, wherein the first fluid passes through the filter element to the outlet side filter chamber, and an outlet to permit the first fluid to flow out of the filter, wherein the filter further comprises fluid detection means to detect a level of the first fluid within the inlet side filter chamber.

## Description

### Technical Field

The invention relates to generally to a filter for fluid and, more particularly, for a filter having means to detect when the filter becomes blocked.

### Background of the Invention

Filters are used in a wide range of industries to filter contaminants from a fluid. In one known application, filters are used in vehicle engines to filter fuel which is particularly important to keep free of contaminants in modern fuel injected engines.

Filters work by allowing a fluid to pass through a porous filter element which acts to trap, or at least separate, contaminants for example water or particulate matter. Typically, when the filter is new, it permits a high flow of fluid to pass through it and the typical efficiency of the filter element is very high and may be effective to filter approximately 99% of contaminants from the flow of fluid. However, over time the rate of fluid flow through the filter is known to reduce as the filter element becomes clogged. A clogged filter presents a restriction to the flow of fuel which can have adverse effects on the system components downstream of the filter.

In order to avoid a system suffering the ill effects of a clogged filter, it is known to define filter life by time or distance. In the context of a fuel filter in an internal combustion engine it is known to calculate the filter life in dependence on a number of factors, for example, the geographical area in which the vehicle is to be used, the grade of fuel available, engine run time and so on. Typically, it may be determined that the filter has an average life of, say 40000km. Therefore, the maintenance schedule of the vehicle is adapted to trigger an event to replace the filter element prior to this interval being reached so as to maintain an effective fuel filter functionality of the vehicle.

However, such a determination of filter life is necessarily a compromise and is generally designed to suit most, but not all, of driving styles. Therefore, in some instances a filter will not require replacement once the interval has been reached and in other instances the filter will become unacceptably clogged before the interval is reached.

In use, fluid is fed through an inlet into an inlet side filter chamber at a low pressure, through a filter element and into an outlet side filter chamber. Alternatively, fluid can be forced to flow through the filter via suction at the outlet of the filter. In such filters, it is known to locate a pressure sensor at or slightly upstream of the filter. The pressure sensor is arranged to be in electrical connection with a monitoring system, which may be the engine management system of the vehicle in which the filter is installed, so as to provide a voltage signal that is proportional to the sensed pressure in the filter inlet. The monitoring system is configured to interpret the voltage signal to determine if the pressure of fuel at the filter inlet is at a permissible value. The monitoring system can thus monitor the operation of the filter and can be configured to detect when the filter has become unacceptably clogged and therefore trigger a preventative maintenance action.

However, the problem with this approach is that pressure sensors are expensive items which makes the filter an expensive device to install on a vehicle. It is therefore an object of the invention to provide a fluid filter with a means of more accurately predicting the end of filter life and which is less expensive.

### Summary of the Invention

It is against this background that there is provided a filter for fluid comprising a filter housing defining a filter cavity within which a filter element is received so as to define an inlet side chamber and an outlet side chamber, an inlet to permit a first fluid to flow into the inlet side chamber, wherein the first fluid passes through the filter element to the outlet side chamber and an outlet to permit the first fluid to flow out of the filter, wherein the filter further comprises fluid detection means to detect a level of the first fluid within the inlet side chamber.

The invention therefore recognises that the operational effectiveness of the filter can be determined by detecting the level of fluid in the inlet side chamber of the filter with the result that a means to diagnose a clogged filter can be provided far more cost effectively than known techniques, for example by the provision of pressure sensors in the fluid supply line upstream of the filter upstream and/or downstream of the filter. The filter thus becomes a less expensive item of the vehicle, which has a direct effect on the overall unit cost of the vehicle and the maintenance cost.

In the specific embodiments described herein, the filter is suitable for fuel, particularly diesel fuel. However, it should be appreciated at this point that the inventive concept is applicable to a filter for any type of fluid where it is desirable to determine whether the fluid flow through the filter is restricted, e.g. a clogged filter element that restricts the flow of fluid therethrough.

In one embodiment, the fluid detection means includes a sensor unit protruding into the inlet side chamber and wherein the sensor unit defines a cage within which a buoyant member is slidably received. In this way, the sensor unit is provided with a floating device, or a 'ball-cock', that is responsive to the level of fluid that resides in the inlet side chamber of the filter. The more clogged the filter element becomes, the higher the level of fuel rises. As the level of fuel rises, the buoyant member floats on top of the fuel and is pushed upwardly by the rising level.

The buoyant member may be provided with an electrically conductive surface that is arranged to contact complementary electrical contacts provided by the sensor unit when the level of fluid in the filter reaches a predetermined level. Thus, as the buoyant member is pushed upwardly by the rising level of fluid in the filter, a point will be reached at which the electrically conductive surface of the buoyant member makes contact with the electrical contacts of the sensor unit which completes an electrical circuit. In order to detect this, the sensor unit may be provided with an electrical interface for connection with an electrical monitoring system, in use.

In addition to a means of detecting the level of a first fluid in the inlet side chamber, in another embodiment of the invention there is provided means to detect the presence of a second fluid in the inlet side chamber. Such means may take the form of first and second electrical contacts across which a voltage is applied in use. The electrical contacts may be located near or adjacent to the floor of the filter so as to detect the presence of a relatively small volume of the second fluid as it collects at the floor of the filter. In such an embodiment, a monitoring system may be arranged to detect the current flowing between the contacts in response to the applied voltage so as to infer the presence of the second fluid in response to a change in resistivity between the contacts, thus changing the current detected.

Expressed in another way, the detection means may comprise an elongate body arranged to extend longitudinally in the inlet side chamber of the filter, the body defining, for detecting the first fluid, a cage located a predetermined distance towards the upper end of the inlet side chamber and within which a buoyant member is slidably received, the buoyant member being operable to complete an electrical circuit when a predetermined level of the first fluid is contained within the inlet side chamber, the body further defining, for detecting a second fluid, a foot end located adjacent a floor of the inlet side chamber having first and second electrical contacts to which a voltage is supplied, in use.

In an alternative embodiment, the detection means includes one or more temperature sensing elements disposed within the inlet side chamber. In this embodiment, when the filter is operating at an acceptable flow rate, the level of fluid in the inlet side chamber is low such that the temperature sensor is exposed to air. However, as the filter becomes clogged, the level of fluid will rise and will eventually immerse the temperature sensor. In an automotive application the temperature of the fluid (fuel) will be greater than the air in the inlet side chamber so, in such circumstances, the chamber in temperature is detected by the monitoring system and action can be taken by a suitable vehicle management system.

In a further alternative embodiment, a plurality of temperature sensing elements are disposed in the inlet side chamber of the filter each of which are spaced apart from one another in a longitudinal direction of the filter. This embodiment provides an advantage in that a greater degree of accuracy is achieved in measuring the effectiveness of the filter. This is because as the level of fluid in the inlet chamber side rises the temperature sensing elements will be immersed one by one. Thus, the suitably configured monitoring system can identify a gradual clogging of the filter element.

In yet another alternative embodiment, the same advantage is obtained by way of an elongate temperature sensing element arranged generally longitudinally within the inlet-side chamber of the filter.

In all of the above mentioned embodiments, the detecting means may be interfaced with a monitoring system which is calibrated appropriately so as to provide an accurate reading of the level of fuel in the inlet side chamber of the filter and, thus, to determine the remaining useful life of the filter.

In a second aspect there is provided a device for installing into a fluid filter, wherein the device includes an electrical interface for interfacing to a monitoring system, in use, and detection means that is receivable within a filter chamber of the filter and operable to detect the level of fuel within the filter chamber.

Preferred and/or option features of the first aspect of the invention may be combined with the second aspect of the invention.

### Brief description of the Drawings

In order for the invention to be more readily understood, some embodiments thereof will now be described with reference to the following figures in which:
Figure 1 is a perspective view of a filter and an associated sensor according to an embodiment of the invention;
Figure 2 is a sectioned side view, in schematic form, of the filter in Figure 1;
Figure 3 is a perspective view, from below, of the sensor in Figure 1 but removed from the filter;
Figure 4a is a side view (partly in section) of the sensor in Figure 3;
Figure 4b is a side view (partly in section) of the sensor in Figure 3, at ninety degrees to the view in Figure 4a;
Figure 5a is a side view of the sensor in Figure 4a but with the plastics housing of the sensor removed;
Figure 5b is a side view of the sensor in Figure 4b but with the plastics housing of the sensor removed; and
Figure 6 is an enlarged perspective view of upper end of the sensor in Figures 5a and 5b.

### Detailed Description of Embodiments of the Invention

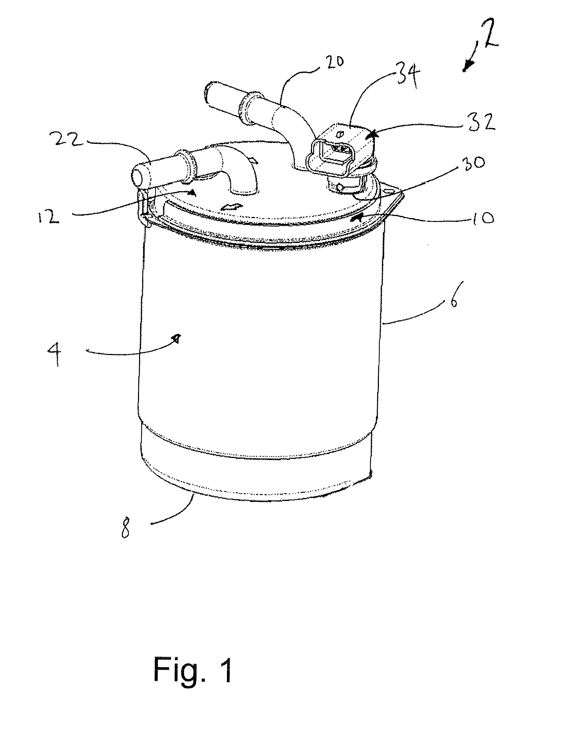

Referring to Figure 1, a filter 2 in accordance with an embodiment of the invention comprises a generally bucket-shaped filter housing 4 having a cylindrical outer wall 6 which is closed at one end by a generally flat lower end face 8. An open upper end of the filter housing 4 carries and is enclosed by a lid 10. The lid 10 of the filter 2 is removeably secured to the filter housing 4 to permit removal and replacement of a filter element (not shown in Figure 1).

An upper surface 12 of the lid 10 includes a filter inlet 20 and a filter outlet 22 in the form of pipes. It should be noted that, in use, the filter inlet 20 and the filter outlet 22 would be connected to pipework to enable fluid to flow into the filter 2 through the inlet 20 and out of the filter 2 through the outlet 22. It should be appreciated that the filter 2 is particularly suitable for filtering fuel, although the invention is not limited to this and is applicable to other fluids. Hereinafter, the use of 'fluid' and 'fuel' are synonymous.

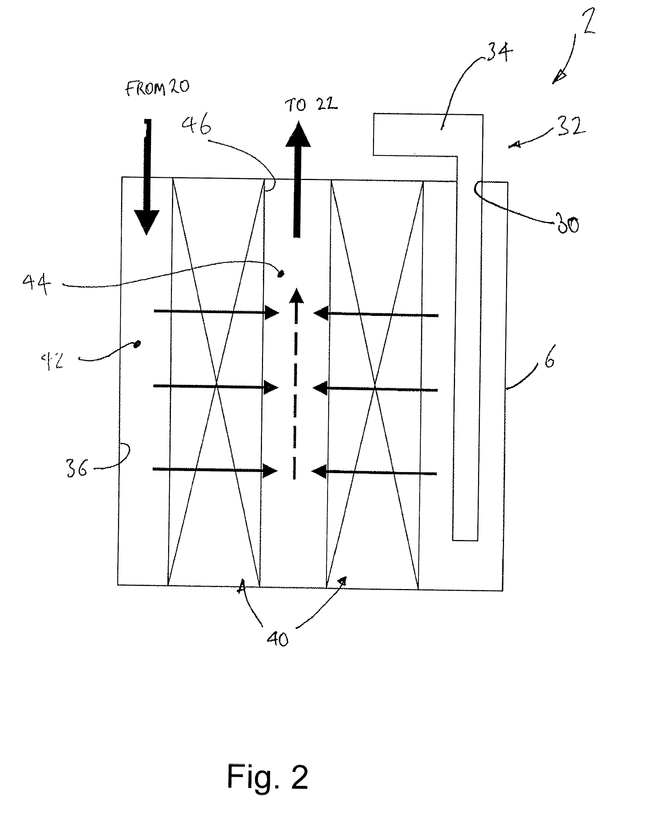

The lid 10 also includes a port 30 through which a sensor unit 32 is received, the sensor unit 32 extending generally axially through an internal cavity (shown as 36 in Figure 2, not shown in Figure 1) defined by the filter housing 4. A head 34 of the sensor unit 32 remains elevated above the upper surface of the lid 10 such that an electrical connector (not shown) is attachable thereto so as to enable the sensor to be connected to a monitoring system.

The general arrangement of the internal cavity 36 of the filter is shown in Figure 2. The cavity 36 receives a filter element 40 in the form of a pleated paper element which defines a thick-walled tube. When the lid 10 is in place on the filter housing 4 the filter element 40 seals against the floor of the filter housing 4 and the lid 10 so as to separate the cavity 36 into an inlet side filter chamber 42 around the outer periphery of the filter element 40 and an outlet side filter chamber 44 in the inner channel 46 of the filter element 40. In use, fluid passes through the filter inlet pipe 20 into the inlet side chamber 42 and then passes through the filter element 40 to the outlet side chamber 44, and from there to the filter outlet pipe 22 (the flow of fluid is generally indicated by the arrows in Figure 2).

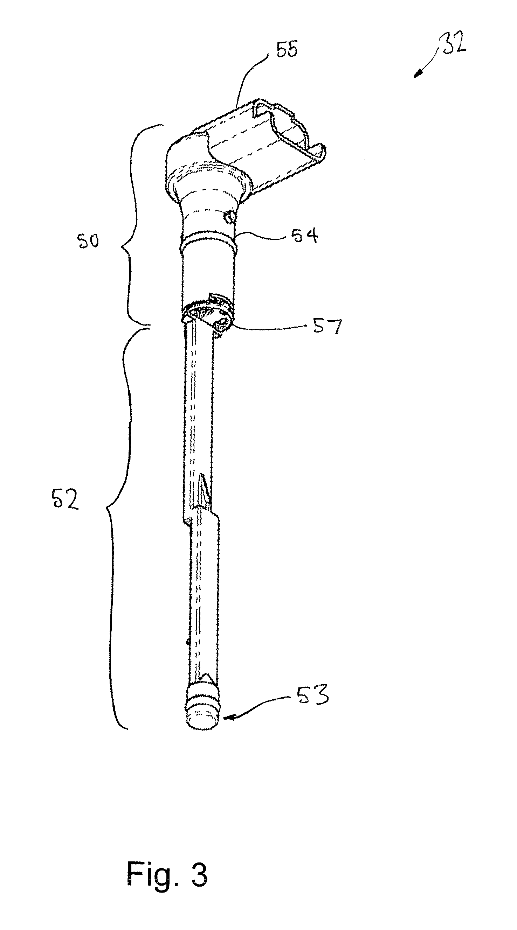

Referring also to Figure 3 in which the sensor unit 32 is shown in perspective, the sensor unit 32 takes the form of an elongate body that includes a relatively large head region 50 from which extends a downwardly depending stem region 52 that terminates in a foot 53. As is shown in Figures 1 and 2, the head region 50 is mounted in the port 30 provided in the lid 10 of the filter 2 such that the stem region 52 extends downwardly into the inlet side chamber 42 of the filter housing 4 so as to lie adjacent the floor of the filter 2.

The sensor unit performs two major functions. Firstly, the head region 50 serves to detect the level of fuel (a first fluid) present in the inlet side chamber 42 of the filter 2 and, secondly, the foot 53 of the stem region 52 serves to detect the presence of water (a second fluid) which, due to its relatively higher density then fuel, tends to sink towards the floor of the filter 2 when the filter 2 is installed in the orientation shown in the figures.

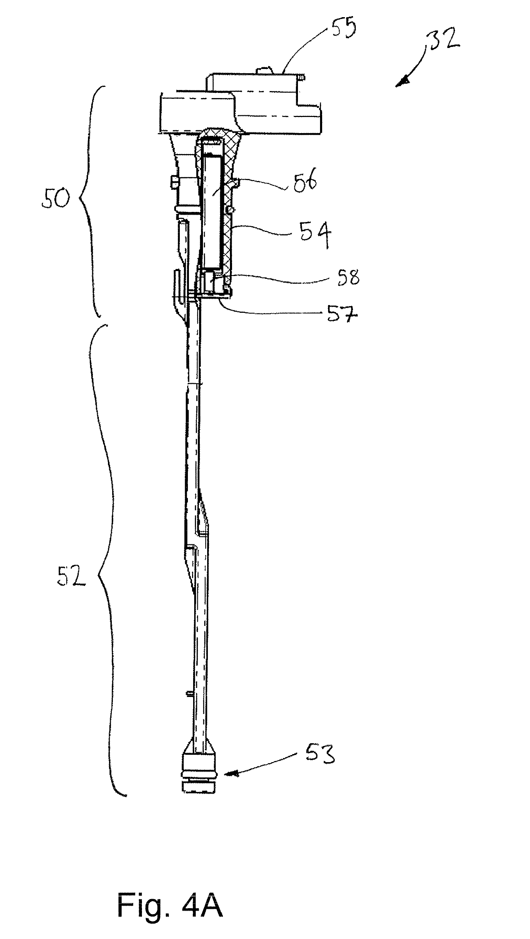

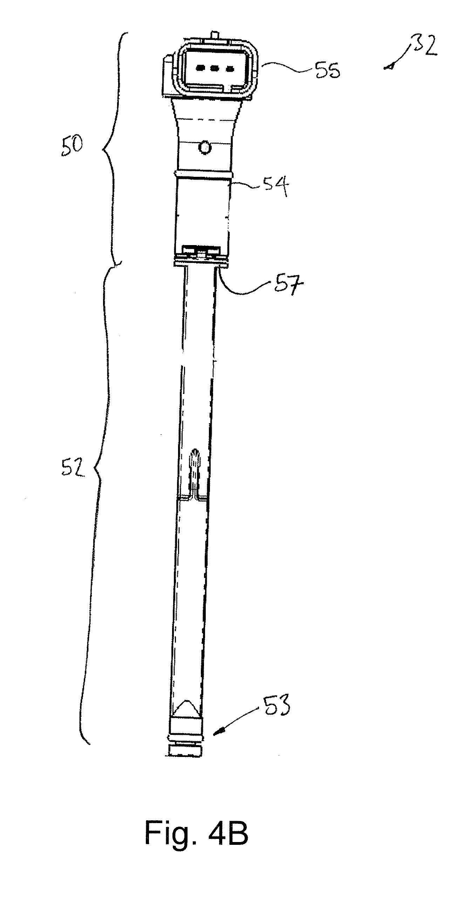

The head region 50 is in the form of a L-shaped plastics housing and includes a generally tubular neck 54 and a connector block 55 that extends generally at a right angle to the neck 54. As can be seen more clearly in Figures 4a and 4b, the neck 54 defines an internal tubular chamber, open at its lowermost end, in which a complementary shaped buoyant member, or "ball-cock" 56 is slidably received. The neck 54 thus forms an open-ended cage for the ball-cock 56 which is able to float on top of the fluid within the inlet side chamber 42 so as to rise and fall within the cage. The lower end of the neck 54 is provided with a plug 57 which closes the lower end of the neck 54 and acts to retain the ball-cock 56 within the cage. The plug 57 clips on to the open lower end of the neck 54 and includes a central upstanding post 58 against which the ball-cock 56 rests when in its lowermost position. At this point it should be appreciated that instead of being clipped to the open end of the neck 54, the plug 57 may also be secured by other means, for example by ultrasonic welding, or by gluing. The functionality of the ball-cock 56 will be described in further detail later.

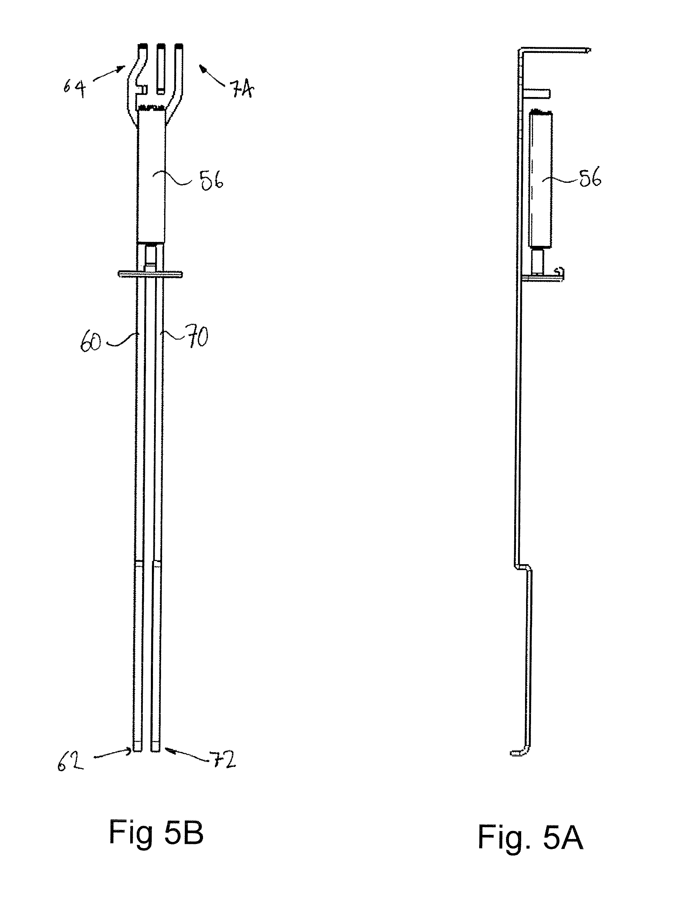

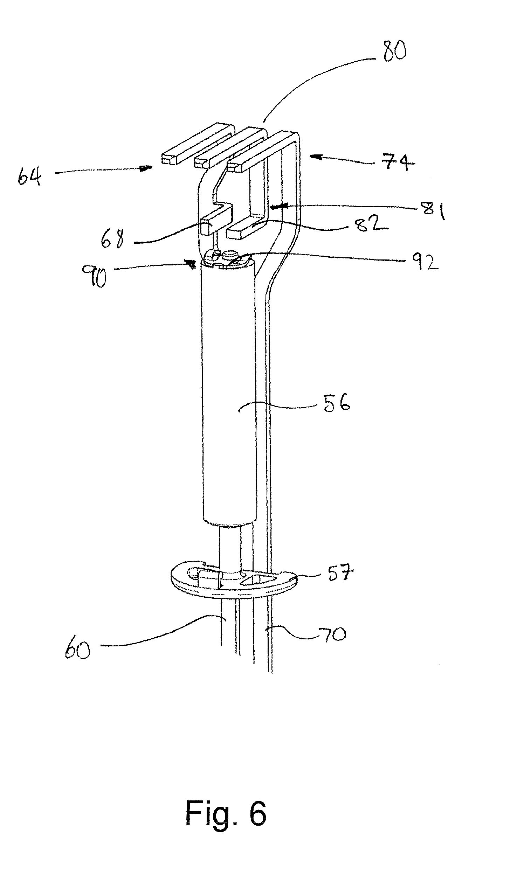

The body of the sensor unit 32 is a moulded plastic component and is formed over a series of electrically conductive electrodes: the electrodes are shown more clearly in Figure 5a, 5b and 6. Examples of suitable plastics material are polyamide resins, polyetheretherketone (PEEK) or polymethylene (POM).

A first electrode 60 (shown on the left in Figure 5b) extends substantially the full height of the sensor unit 2 and includes a foot end 62 that terminates in the foot 53 of the stem region 52 and a head end 64 which extends up past the ball-cock 56 and bends through substantially ninety degrees so as to be housed in the connector block 55 (not shown on Figure 5b) of the sensor unit 32.

A second electrode 70 (shown on the right in Figure 5b) also extends the full height of the sensor unit 32 and, thus, includes a foot end 72 that terminates in the foot 53 of the stem region 52 and a head end 74 that extends up past the ball-cock 56 and bends through substantially ninety degrees to be housed by the connector block 55 (not shown on Figure 5b) of the sensor unit 32.

The first and second electrodes 60, 70 form a sensor pair which are connected to a monitoring system in use by an electrical plug (not shown). The plug applies a voltage across the electrodes and a monitoring system (also not shown) is configured to monitor the current flowing between the foot-end 62 of the first electrode 60 to the foot-end 72 of the second electrode 70.

In use, the foot 53 of the stem region 52 is immersed in fluid and is provided with an open configuration such that the foot-ends 62, 72 of the first and second electrodes 60, 70 are also exposed to fluid which, in the case of the embodiment, is fuel. Since the fuel is an electrolyte, a relatively small amount of current passes between the ends of the first and second electrodes 60, 70 which is monitored by the monitoring system.

In normal operation of the filter, the foot 53 of the stem region 52 is immersed in fuel. Since fuel has a known resistivity, a known electrical current will flow between the foot ends 62, 72 of the first and second electrodes 60, 70. However, as the amount of water in the floor of the inlet side filter chamber 42 increases, the resistivity of the fluid surrounding the foot ends 62, 72 of the first and second electrodes 60, 70 is altered such that the current flowing between the foot ends 62, 72 of the first and second electrodes 60, 70 changes. The monitoring system monitors this change in current and is configured to trigger a warning signal or store an error log entry if the current levels exceed a known threshold. Therefore, at the next maintenance event, the water can be removed from the filter.

Referring also to Figure 6 the head region 52 of the probe is shown with the plastics housing removed so as to expose the metal electrodes 60, 70.

In addition to the first sensor pair, a second sensor pair is provided by the first electrode 60 and a further, third, electrode 80. The third electrode 80 is disposed between and approximately in parallel with the upper ends 64, 74 of the first and second electrodes 60, 70. However, the third electrode 80 only extends downwardly a short way and includes a lower end 81 that bends through substantially ninety degrees to terminate in a lateral tooth 82 that opposes the upper end of the ball-cock 56. The first electrode 60 is also provided with a laterally extending tooth 68 that lays adjacent the tooth 82 of the third electrode 82, axially in line with ball-cock 56.

The uppermost end face 90 of the ball-cock 56 is provided with an electrically conductive surface 92 in the form of a plate such that as the ball-cock 56 rises in the cage, the electrically conductive plate 92 eventually makes contact against the teeth 68 and 82 of the first and third electrodes 60, 80 thus completing an electrical circuit. The monitoring system is arranged to sense the completing of this contact which is indicative of a high fluid level in the inlet side chamber of the filter cavity. Appropriate action can then be taken immediately to fix the filter or an appropriate maintenance action can be scheduled for a suitable future point in time.

Although the invention has been described with reference to a specific embodiment, it should be appreciated that variations will be evident to the skilled person without departing from the inventive concept, as defined by the claims.

For example, it should be appreciated that the invention is not limited to the exact configuration of the filter as described above and that it is not essential for the filter element to be closed by the lid 10 and the floor of the filter. Alternatively the filter could be a self contained filter cartridge that slots into the housing in a cassette-like manner.

Also, although the cage is shown as provided with solid walls in Figures 3, 4a and 4b, it should be appreciated that this need not be the case and that the walls of the cage may have openings formed therein to assist the passage of fluid.

In one alternative embodiment for example (not shown), instead of the cage-and-ball-cock arrangement described above, the level of fuel in the filter chamber is detected by a temperature sensing element that is located at the upper end of the filter housing. Thus as the level of fuel in the inlet-side chamber of the filter rises due to gradual clogging of the filter element, the temperature sensitive element will eventually be immersed in fuel. Since the temperature of the fuel will be significantly different than the surrounding air, the monitoring system detects the temperature change and can infer that the filter element is clogged and that suitable action should be taken, for example, cleaning or replacement.

In this embodiment, the temperature sensing means may take the form of a thermocouple or a thermistor, either of the positive temperature coefficient type or of the negative temperature coefficient type.

In a further alternative embodiment (also not shown), the means for detecting the fluid level is embodied by opposed electrical contacts across which a voltage is supplied, in use, and the monitoring system is configured to measure the change in resistivity between the contacts. Thus, the current flowing between the contacts in circumstances where the contacts are exposed to air within the filter changes when the contacts are immersed in fuel. Thus, the change is resistivity between the contacts is indicative of the level of fuel within the filter.

In an improvement to these embodiments (also not shown), a plurality of temperature sensors, or electrical contacts, are located in the inlet-side chamber and are arranged spaced from one another in line with the longitudinal axis of the filter. The monitoring system is therefore adapted to monitor each of the plurality of temperature sensing elements, or electrical contacts and is therefore able to determine a rising level of fluid in the inlet-side chamber of the filter. Thus the monitoring system can track the level of clogging to a greater resolution.

In a further embodiment (not shown), instead of a plurality of such sensors, an elongate temperature sensor may be located in the inlet-side chamber and is oriented generally in accordance with the longitudinal axis of the filter.

## Claims

1. A filter for fluid comprising:
a filter housing (4) defining a filter cavity (36) within which a filter element (40) is received so as to define an inlet side chamber (42) and an outlet side chamber (44);
an inlet (20) to permit a first fluid to flow into the inlet side chamber (42), wherein the first fluid passes through the filter element (40) to the outlet side filter chamber (44); and
an outlet (22) to permit the first fluid to flow out of the filter (2), wherein the filter further comprises detection means (32) to detect a level of the first fluid within the inlet side filter chamber (42).

2. The filter of claim 1, wherein the detection means includes a sensor unit (32) protruding into the inlet side chamber (42) and wherein the sensor unit (32) defines a cage (54) within which a buoyant member (56) is slidably received.

3. The filter of claim 2, wherein the buoyant member (56) is provided with an electrically conductive surface (92) that is arranged to contact complementary electrical contacts (68, 82) provided in the sensor unit (32) so as to complete an electrical circuit, in use, when the level of the fluid within the inlet-side chamber (42) reaches a predetermined level.

4. The filter of claim 3, wherein the cage (54) is arranged at a predetermined height above a floor of the inlet side chamber (42) in order to detect a high level of fluid within the chamber (42).

5. The filter of any of claims 2 to 4, wherein the sensor unit (32) further includes means to detect the presence of a second fluid within the inlet side chamber (42).

6. The filter of claim 5, wherein the second fluid detection means includes first and second electrical contacts (62, 72) across which a voltage is applied, in use.

7. The filter of claim 6, wherein the first and second contacts (62, 72) are located adjacent a floor of the inlet side chamber (42) of the filter (2).

8. The filter of claim 1, wherein the detection means (32) includes one or more temperature sensing elements located within the inlet side chamber (42).

9. The filter of claim 6, wherein a plurality of temperature sensing elements are located in the inlet side chamber (42) spaced apart from one another in a longitudinal direction of the filter housing (4).

10. The filter of claim 8, wherein a single elongate temperature sensing element is arranged in the inlet side chamber (42) generally in a longitudinal direction of the filter housing (4).

11. The filter of claim 1, wherein the detection means (32) includes first and second electrical contacts across which a voltage is applied, in use.

12. The filter of claim 1, wherein the detection means (32) comprises an elongate body (50, 52) arranged to extend longitudinally in the inlet side chamber (42) of the filter (2), the body (50, 52) defining, for detecting the first fluid, a cage located a predetermined distance towards the upper end of the inlet side chamber (42) and within which a buoyant member (56) is slidably received, the buoyant member being operable to complete an electrical circuit when a predetermined level of the first fluid is contained within the inlet side chamber (42), the body (50, 52) further defining, for detecting a second fluid, a foot end (53) located adjacent a floor of the inlet side chamber (42) having first and second electrical contacts (62, 72) to which a voltage is supplied, in use.

13. A device for installing into a fluid filter (2), wherein the device includes an electrical interface for interfacing to a monitoring system, in use, and detection means (32) that is receivable within a filter chamber (42) of the filter (2) and operable to detect the level of a first fluid within the filter chamber.

14. The device of claim 13, wherein the detection means includes a sensor unit (32) arranged to protrude into an inlet side chamber (42) of the filter (2) and wherein the sensor unit (32) defines a cage (54) within which a buoyant member (56) is slidably received.

15. The device of claim 14, wherein the buoyant member (56) is provided with an electrically conductive surface (92) that is arranged to contact complementary electrical contacts (68, 82) provided in the sensor unit (32) so as to be operable to complete an electrical circuit, in use, when the level of the fluid within the inlet side chamber (42) reaches a predetermined level.

16. The device of claim 14 or claim 15, wherein the sensor unit (32) further includes means to detect the presence of a second fluid within the inlet side chamber (42).

17. The device of claim 16, wherein the second fluid detection means includes first and second electrical contacts (62, 72) across which a voltage is applied, in use.

18. The device of claim 13, wherein the detection means (32) includes one or more temperature sensing elements located within an inlet side chamber (42).

19. The device of claim 18, wherein a plurality of temperature sensing elements are located in the inlet side chamber (42) spaced apart from one another in a longitudinal direction of the filter housing (4).

20. The device of claim 18, wherein a single elongate temperature sensing element is arranged in the inlet side chamber (42) in a longitudinal direction of the filter housing (4).

21. The device of claim 13, wherein the detection means (32) comprises an elongate body (50, 52) arranged to extend longitudinally in the chamber (42) of the filter (2), the body (50, 52) defining, for detecting the first fluid, a cage located at an upper end of the body (50, 52) and within which a buoyant member (56) is slidably received, the buoyant member being operable to complete an electrical circuit when a predetermined level of the first fluid is contained within the chamber (42), the body (50, 52) further defining, for detecting a second fluid, a foot end (53) located at a lower end of the body and having first and second electrical contacts (62, 72) to which a voltage is supplied, in use.
